# DEMANDE DE BREVET EUROPEEN

(11) **EP 4 420 577 A1**
(43) Date de publication de la demande: **28.08.2024**
(21) Numéro de dépôt: 24158269.1
(22) Date de dépôt: 19.02.2024
(51) Int. Cl.: A47J 43/07, A47J 43/25, B26D 1/12

(54) **OUTIL DE TRAVAIL ROTATIF A EJECTION AMELIOREE**

(30) Priorité: 24.02.2023 FR 2301730
(71) Demandeur: SEB S.A., 69130 Ecully (FR)
(72) Inventeur: MORICE, Katell, 69134 Ecully CEDEX (FR); NESPOUX, Johan, 69134 Ecully CEDEX (FR)
(74) Mandataire: SEB Développement

(57) **Abrégé**

L'invention concerne un outil de travail (30) rotatif comportant un organe d'entraînement (11) en rotation selon un axe de rotation (R) et une paroi latérale circonférentielle (32) présentant au moins un organe de découpe externe (33) présentant un bord d'attaque (34) adjacent à un passage traversant (35) ménagé dans la paroi latérale circonférentielle (32), la paroi latérale circonférentielle (32) présentant une bordure circonférentielle (37) ménageant une ouverture frontale (36) pour l'évacuation des aliments découpés.

Selon l'invention, la face intérieure de la paroi latérale circonférentielle (32) porte au moins une nervure interne (40) configurée pour éjecter les aliments découpés vers l'ouverture frontale (36) lors de la rotation de l'outil de travail (30).

L'invention concerne également un dispositif de préparation d'aliments comprenant un outil de travail (30) rotatif du type précité et un boîtier définissant un logement présentant une ouverture de montage pour la mise en place de l'outil de travail (30).

## Description

### Domaine technique

La présente invention concerne le domaine technique des dispositifs de préparation d'aliments comportant un outil de travail rotatif de type tambour pour découper progressivement les aliments.

La présente invention concerne plus particulièrement, mais non exclusivement, les appareils électroménagers de préparation culinaire comportant un boîtier motorisé portant un accessoire amovible formant un dispositif de préparation d'aliments du type précité. La présente invention concerne également les accessoires amovibles du type précité.

### Etat de la technique

Il est connu d'utiliser des outils de travail rotatifs cylindriques ou tronconiques pour émincer ou pour effiler les aliments, notamment des légumes ou du fromage. Ces outils de travail rotatifs forment un tambour présentant une un organe d'entraînement agencé à l'une de ses extrémités, et une paroi circonférentielle sur laquelle sont agencés des organes de coupe. Les aliments découpés sont reçus à l'intérieur du tambour et sont évacués par une extrémité ouverte disposée à l'opposé de l'organe d'entrainement. Toutefois certains aliments découpés peuvent former des amas à l'intérieur du tambour.

Le document US1527087 propose un dispositif de découpe d'aliments comportant un tambour cylindrique de découpe d'aliments monté sur un support comportant un bras s'étendant à l'intérieur du tambour pour faciliter l'évacuation des aliments hors du tambour. Un inconvénient de cette réalisation est que la mise en place et le retrait du tambour sont peu ergonomiques.

Le document EP3082533 propose un dispositif de découpe d'aliments comportant un tambour tronconique de découpe d'aliments entrainé en rotation dans un magasin ainsi qu'un organe d'éjection d'aliments monté sur ledit magasin et s'étendant à l'intérieur dudit tambour. Un inconvénient de cette réalisation est qu'elle nécessite une manipulation supplémentaire pour la mise en place ou le retrait de l'organe d'éjections d'aliments.

### Résumé de l'invention

La présente invention vise à remédier à ces inconvénients.

Le problème technique à la base de l'invention consiste à simplifier la construction d'un dispositif de découpe d'aliments présentant une éjection d'aliments améliorée.

A cet effet, un premier aspect de l'invention a pour objet un outil de travail rotatif comportant un organe d'entraînement en rotation et une paroi latérale circonférentielle présentant au moins un organe de découpe externe, dans lequel l'éjection des aliments est améliorée.

Un autre aspect de l'invention a pour objet un dispositif de préparation d'aliments comportant un outil de travail rotatif comportant un organe d'entraînement en rotation et une paroi latérale circonférentielle présentant au moins un organe de découpe externe, dans lequel l'éjection des aliments est améliorée.

Ces objets sont atteints avec un outil de travail rotatif comportant un organe d'entraînement en rotation selon un axe de rotation et une paroi latérale circonférentielle s'étendant autour de l'axe de rotation, la paroi latérale circonférentielle présentant au moins un organe de découpe externe présentant un bord d'attaque adjacent à un passage traversant ménagé dans la paroi latérale circonférentielle, la paroi latérale circonférentielle présentant une bordure circonférentielle ménageant une ouverture frontale pour l'évacuation des aliments découpés, du fait que la face intérieure de la paroi latérale circonférentielle porte au moins une nervure interne configurée pour éjecter les aliments découpés vers l'ouverture frontale lors de la rotation de l'outil de travail rotatif pour découper les aliments. Ainsi lors de la rotation de l'outil de travail la ou les nervures internes tendent à repousser les aliments découpés vers l'ouverture frontale, ce qui contribue à éviter les phénomènes d'accumulation d'aliments découpés à l'intérieur de l'outil de travail.

Ladite au moins une nervure interne peut se rapprocher de la bordure circonférentielle lorsque parcourue dans une direction allant du passage traversant au bord d'attaque adjacent. De préférence, ladite au moins une nervure interne peut sur toute sa longueur se rapprocher de la bordure circonférentielle lorsque parcourue dans une direction allant du passage traversant au bord d'attaque adjacent.

Ladite au moins une nervure interne peut s'étendre sur au moins 90° autour de l'axe de rotation, et de préférence sur au moins 120° autour de l'axe de rotation. Ces dispositions permettent de favoriser l'éjection des aliments découpés.

Ladite au moins une nervure interne peut s'étendre jusqu'à la bordure circonférentielle. Cette disposition permet de favoriser l'éjection des aliments découpés.

Ladite au moins une nervure interne peut être surmoulée sur la face intérieure de la paroi latérale circonférentielle. Cette disposition permet d'obtenir une construction économique. En alternative ladite nervure interne peut notamment être clipsée sur a face intérieure de la paroi latérale circonférentielle.

Ladite au moins une nervure interne peut présenter une configuration hélicoïdale. Cette disposition permet de favoriser l'éjection des aliments découpés.

L'outil de travail rotatif peut comporter une paroi de fond agencée à l'opposé de l'ouverture frontale et ladite au moins une nervure interne peut s'étendre à partir de la paroi de fond. Cette disposition permet de favoriser l'éjection des aliments découpés en évitant l'accumulation d'aliments découpés au fond de l'outil de travail.

La face intérieure de la paroi latérale circonférentielle peut porter une pluralité de nervures internes configurées pour éjecter les aliments découpés vers l'ouverture frontale lors de la rotation de l'outil de travail rotatif pour découper les aliments. Cette disposition permet de favoriser l'éjection des aliments découpés.

La face intérieure de la paroi latérale circonférentielle peut porter de 2 à 6 nervures internes configurées pour éjecter les aliments découpés vers l'ouverture frontale lors de la rotation de l'outil de travail rotatif pour découper les aliments. Cette disposition permet de favoriser l'éjection des aliments découpés.

Les nervures internes peuvent être régulièrement réparties sur la face intérieure de la paroi latérale circonférentielle.

La paroi latérale circonférentielle peut comprendre une partie métallique circonférentielle présentant les passages traversants, ledit au moins un organe de découpe externe étant issu de la partie métallique circonférentielle. Une telle construction permet d'obtenir une bonne qualité de coupe avec une construction économique.

La bordure circonférentielle peut alors être surmoulée sur l'une des extrémités de la partie métallique circonférentielle.

L'organe d'entrainement en rotation peut être porté par une extrémité d'entraînement surmoulée sur l'autre extrémité de la partie métallique circonférentielle.

La paroi latérale circonférentielle peut présenter une pluralité d'organes de découpe externes présentant chacun un bord d'attaque adjacent à un passage traversant ménagé dans la paroi latérale circonférentielle.

La paroi latérale circonférentielle peut présenter une géométrie tronconique. La paroi latérale circonférentielle peut aussi présenter une géométrie cylindrique ou une géométrie conique.

Ces objets sont atteints également avec un dispositif de préparation d'aliments comprenant :
- un outil de travail rotatif comportant un organe d'entraînement en rotation selon un axe de rotation et une paroi latérale circonférentielle s'étendant autour de l'axe de rotation, la paroi latérale circonférentielle présentant au moins un organe de découpe externe adjacent à un passage traversant, la paroi latérale circonférentielle présentant une bordure circonférentielle ménageant une ouverture frontale pour l'évacuation des aliments découpés,
- un boîtier définissant un logement présentant une ouverture de montage pour la mise en place de l'outil de travail dans le logement, le boîtier présentant une cheminée pour l'introduction des aliments à découper, la cheminée débouchant dans le logement au moins partiellement en regard dudit au moins un organe de découpe externe,
du fait que l'outil de travail est conforme à l'une au moins des caractéristiques précitées.

Le dispositif de préparation d'aliments peut comporter un poussoir pouvant être déplacé dans la cheminée pour pousser les aliments vers l'outil de travail. Une telle disposition permet d'améliorer le débit de découpe des aliments.

Le boîtier peut porter un organe de transmission monté libre en rotation, l'organe d'entraînement de l'outil de travail monté dans le logement venant alors en prise avec l'organe de transmission pour entraîner en rotation l'outil de travail.

Le dispositif de préparation d'aliments peut comporter une base motorisée portant le boîtier, l'outil de travail monté dans le logement étant entrainé par un moteur électrique disposé dans la base motorisée, si désiré par l'intermédiaire de l'organe de transmission.

Le boîtier peut être monté amovible par rapport à la base motorisée.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'un exemple de réalisation d'un outil de travail rotatif selon l'invention selon une première orientation ;
La figure 2 est une vue en perspective de l'exemple de réalisation d'un outil de travail rotatif selon l'invention illustré sur la figure 1 selon une deuxième orientation ;
La figure 3 est une vue partielle en perspective de l'exemple de réalisation d'un outil de travail rotatif selon l'invention illustré sur les figures 1 et 2 ;
La figure 4 est une vue en coupe d'un dispositif de préparation d'aliments motorisé comportant l'exemple de réalisation d'un outil de travail rotatif selon l'invention illustré sur les figures 1 à 3.

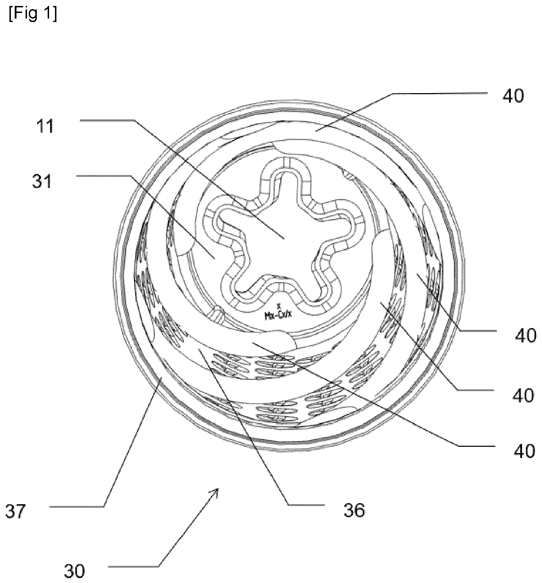

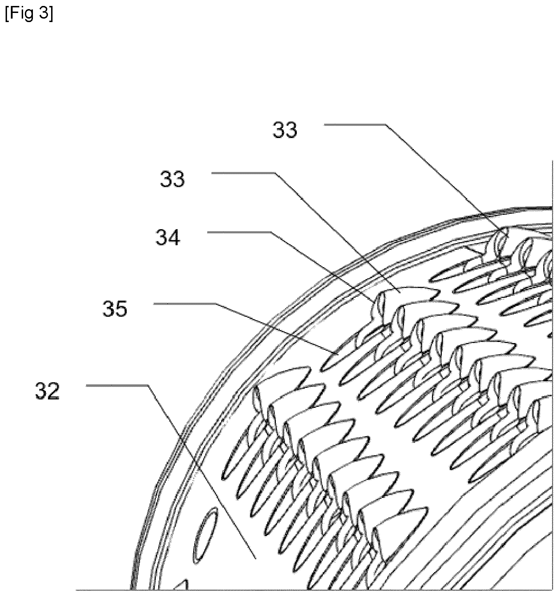

Un exemple de réalisation d'un outil de travail 30 rotatif selon l'invention est illustré sur les figures 1 à 3. L'outil de travail 30 rotatif comporte un organe d'entraînement 11 en rotation selon un axe de rotation R et une paroi latérale circonférentielle 32 s'étendant autour de l'axe de rotation R. La paroi latérale circonférentielle 32 présente une bordure circonférentielle 37 ménageant une ouverture frontale 36 pour l'évacuation des aliments découpés. L'organe d'entraînement 11 en rotation est porté par une extrémité d'entraînement 31 agencée à l'opposé de la bordure circonférentielle 37. L'outil de travail 30 comporte une paroi de fond 12 agencée à l'opposé de l'ouverture frontale 36. L'organe d'entraînement 11 est formé dans la paroi de fond 12. Ainsi la paroi de fond 12 forme l'extrémité d'entraînement 31.

Dans l'exemple de réalisation illustré sur les figures 1 à 3, la paroi latérale circonférentielle 32 présente une géométrie tronconique. La paroi latérale circonférentielle 32 s'évase en direction de la bordure circonférentielle 37, pour faciliter l'évacuation des aliments découpés. A titre de variante, une géométrie cylindrique ou une géométrie conique peuvent notamment être envisagées pour la paroi latérale circonférentielle 32.

La paroi latérale circonférentielle 32 présente au moins un organe de découpe externe 33 présentant un bord d'attaque 34 adjacent à un passage traversant 35 ménagé dans la paroi latérale circonférentielle 32.

Dans l'exemple de réalisation illustré sur les figures 1 à 3, la paroi latérale circonférentielle 32 présente plusieurs organes de découpe externe 33 présentant chacun bord d'attaque 34 adjacent à un passage traversant 35 ménagé dans la paroi latérale circonférentielle 32. Plusieurs organes de découpe externe 33 sont agencés sur la paroi latérale circonférentielle 32 entre la paroi de fond 12 et l'ouverture frontale 36. Les organes de découpe externe 33 de l'exemple de réalisation illustré sur les figures 1 à 3 sont prévus pour effiler les aliments. A titre de variante, d'autres types d'organe de découpe externe 33 peuvent être envisagés, par exemple des organes de découpe externe 33 allongés prévus pour trancher les aliments.

Dans l'exemple de réalisation illustré sur les figures 1 à 3, la paroi latérale circonférentielle 32 présente une pluralité d'organes de découpe externe 33 présentant chacun un bord d'attaque 34 adjacent à un passage traversant 35 ménagé dans la paroi latérale circonférentielle 32.

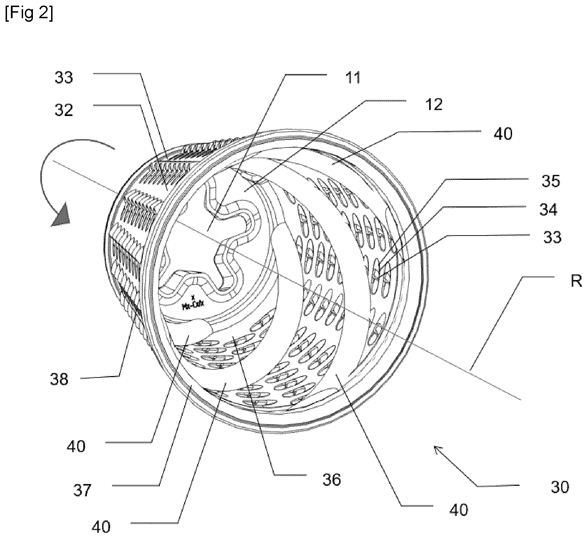

La face intérieure de la paroi latérale circonférentielle 32 porte au moins une nervure interne 40 configurée pour éjecter les aliments découpés vers l'ouverture frontale 36 lors de la rotation de l'outil de travail 30 rotatif pour découper les aliments. Tel que bien visible sur la figure 2, ladite au moins une nervure interne 40 se rapproche de la bordure circonférentielle 37 lorsque parcourue dans une direction allant du passage traversant 35 au bord d'attaque 34 adjacent.

Dans l'exemple de réalisation illustré sur les figures 1 à 3, la face intérieure de la paroi latérale circonférentielle 32 porte quatre nervures internes 40 configurées pour éjecter les aliments découpés vers l'ouverture frontale 36 lors de la rotation de l'outil de travail 30 rotatif pour découper les aliments. Les nervures internes 40 sont régulièrement réparties sur la face intérieure de la paroi latérale circonférentielle 32. A titre de variante la face intérieure de la paroi latérale circonférentielle 32 peut porter une pluralité de nervures internes 40 configurées pour éjecter les aliments découpés vers l'ouverture frontale 36 lors de la rotation de l'outil de travail 30 rotatif pour découper les aliments. La face intérieure de la paroi latérale circonférentielle 32 peut notamment porter de 2 à 6 nervures internes 40 configurées pour éjecter les aliments découpés vers l'ouverture frontale 36 lors de la rotation de l'outil de travail 30 rotatif pour découper les aliments. Si désiré la face intérieure de la paroi latérale circonférentielle 32 peut porter une seule nervures interne 40 configurée pour éjecter les aliments découpés vers l'ouverture frontale 36 lors de la rotation de l'outil de travail 30 rotatif pour découper les aliments.

Dans l'exemple de réalisation illustré sur les figures 1 à 3, les nervures internes 40 s'étendent sur environ la moitié de la circonférence de la paroi latérale circonférentielle 32. A titre de variante, les nervures internes 40 peuvent s'étendre sur au moins 90° autour de l'axe de rotation R, et de préférence sur au moins 120° autour de l'axe de rotation R.

Dans l'exemple de réalisation illustré sur les figures 1 à 3, les nervures internes 40 s'étendent jusqu'à la bordure circonférentielle 37. Les nervures internes 40 s'étendent à partir de la paroi de fond 12. Les nervures internes 40 présentent une configuration hélicoïdale.

Dans l'exemple de réalisation illustré sur les figures 1 à 3, la paroi latérale circonférentielle 32 comprend une partie métallique circonférentielle 38 présentant les passages traversants 35. La partie métallique circonférentielle 38 est par exemple réalisée en acier inoxydable. Les organes de découpe externe 33 sont issus de la partie métallique circonférentielle 38. L'outil de travail 30 présente une construction surmoulée. La bordure circonférentielle 37 est surmoulée sur l'une des extrémités de la partie métallique circonférentielle 38 pour former l'ouverture frontale 36. L'extrémité d'entraînement 31 est surmoulée sur l'autre extrémité de la partie métallique circonférentielle 38. La bordure circonférentielle 37 et l'extrémité d'entraînement 31 sont par exemple réalisées en matière plastique. Les nervures internes 40 sont surmoulées sur la face intérieure de la paroi latérale circonférentielle 32. Les nervures internes 40 sont par exemple réalisées en matière plastique.

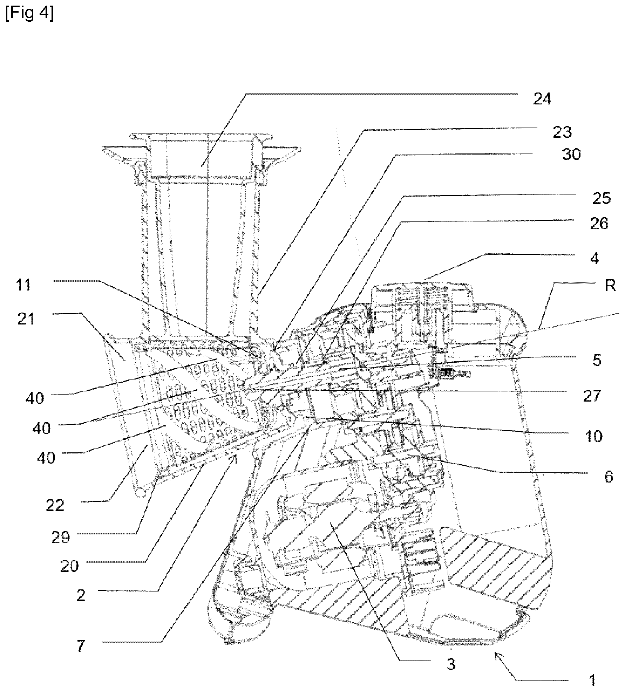

Le dispositif de préparation d'aliments illustré sur la figure 4 comprend un boîtier 20 recevant l'outil de travail 30 rotatif. Le boîtier 20 définit un logement 21 présentant une ouverture de montage 22 pour la mise en place de l'outil de travail 30 dans le logement 21. Le boîtier 20 présente une cheminée 23 pour l'introduction des aliments à découper. La cheminée 23 débouche dans le logement 21 au moins partiellement en regard dudit au moins un organe de découpe externe 33 de l'outil de travail 30 agencé dans le logement 21. Selon une forme de réalisation préférée illustrée sur la figure 4, le dispositif de préparation d'aliments comporte un poussoir 24 pouvant être déplacé dans la cheminée 23 pour pousser les aliments vers l'outil de travail 30 monté dans le boîtier 20.

Le dispositif de préparation d'aliments illustré sur la figure 4 comprend une base motorisée 1 portant le boîtier 20. Tel que visible sur la figure 4, la base motorisée 1 loge un moteur électrique 3 piloté par un dispositif de commande 4. Le moteur électrique 3 est relié à une sortie d'entrainement 5, si désiré par l'intermédiaire d'un dispositif de transmission 6. Le dispositif de transmission 6 peut comporter un réducteur. La vitesse de rotation de la sortie d'entraînement 5 peut être variable. De préférence, la vitesse de rotation de la sortie d'entraînement 5 se situe et/ou est incluse dans la plage de vitesses comprise entre 100 et 300 t/min. L'outil de travail 30 monté dans le logement 21 est entrainé par le moteur électrique 3 disposé dans la base motorisée 1.

Dans l'exemple de réalisation illustré sur la figure 4, le boîtier 20 est monté amovible par rapport à la base motorisée 1. Le boîtier 20 comporte à cet effet des moyens de fixation 10 prévus pour venir en prise avec des moyens de fixation complémentaires 7 de la base motorisée 1. Le boîtier 20 et l'outil de travail 30 rotatif appartiennent à un accessoire de travail rotatif 2. L'accessoire de travail rotatif 2 est ainsi amovible par rapport à la base motorisée 1. Le poussoir 24 appartient aussi à l'accessoire de travail rotatif 2.

Dans l'exemple de réalisation illustré sur la figure 4, les moyens de fixation 10 et les moyens de fixation complémentaires 7 sont des moyens de fixation à baïonnette. A titre de variante, d'autres moyens de fixation peuvent être utilisés, notamment une bague de verrouillage assemblée par vissage ou par baïonnette, ou encore des crochets de retenue.

Plus particulièrement dans l'exemple de réalisation illustré sur la figure 4, le boîtier 20 porte un organe de transmission 25 monté libre en rotation. L'axe de rotation de l'organe de transmission 25 correspond à l'axe de rotation R de l'outil de travail 30. Tel que visible sur la figure 4, l'axe de rotation de l'organe de transmission 25 est incliné vers le bas en direction de l'ouverture de montage 22. Cette disposition permet d'améliorer le caractère déversant de l'outil de travail 30 rotatif. L'organe de transmission 25 est entraîné par la sortie d'entrainement 5 et vient en prise avec l'outil de travail 30 agencé dans le logement 21. L'organe de transmission 25 comporte une première extrémité 26 venant en prise avec la sortie d'entraînement 5. La première extrémité 26 est par exemple formée par un arbre de section hexagonale ou carrée. L'organe de transmission 25 comporte une deuxième extrémité 27 agencée dans le logement 21, prévue pour entraîner en rotation l'outil de travail 30 agencé dans le logement 21. La deuxième extrémité 27 peut comporter des ergots pour retenir l'outil de travail 30 agencé dans le logement 21. Si désiré les ergots peuvent former des crochets. Ainsi l'organe d'entraînement 11 de l'outil de travail 30 monté dans le logement 21 vient en prise avec l'organe de transmission 25 pour entraîner en rotation l'outil de travail 30. L'outil de travail 30 monté dans le logement 21 est entrainé par le moteur électrique 3 disposé dans la base motorisée 1 par l'intermédiaire de l'organe de transmission 25.

Tel que visible sur la figure 4, le logement 21 est déversant en direction de l'ouverture de montage 22. Le boîtier 20 présente une butée inférieure 29 pour retenir l'outil de travail 30 agencé dans le logement 21. La butée inférieure 29 est formée à proximité de l'ouverture de montage 22.

Le dispositif de préparation d'aliments illustré sur la figure 4 fonctionne et s'utilise de la manière suivante.

L'utilisateur monte le boîtier 20 sur la base motorisée 1 et met en place l'outil de travail 30 dans le logement 21 du boîtier 20. L'organe d'entraînement 11 de l'outil de travail 30 monté dans le logement 21 vient en prise avec l'organe de transmission 25 pour entraîner en rotation l'outil de travail 30.

L'utilisateur peut mettre en marche le dispositif de préparation d'aliments en actionnant le dispositif de commande 4. L'outil de travail 30 agencé dans le logement 21 du boîtier 20 monté sur la base motorisée 1 est entraîné en rotation par l'organe de transmission 25. L'outil de travail 30 est de préférence entrainé à des vitesses de rotation comprises entre 100 et 200 t /min, pour obtenir un débit suffisant.

Les organes de découpe externe 33 défilent alors sous la base de la cheminée 23 pour entamer la base des aliments introduits dans la cheminée 23. Les bords d'attaque 34 découpent des fragments d'aliments qui sont évacués par les passages traversants 35 de paroi latérale circonférentielle 32. Lors de la rotation de l'outil de travail 30 les nervures internes 40 contribuent alors à évacuer les fragments d'aliments vers l'ouverture frontale 36 de l'outil de travail 30. L'évacuation des aliments découpés est ainsi facilitée, ce qui permet d'éviter les phénomènes de bourrage à l'intérieur de l'outil de travail 30.

L'outil de travail 30 présente une structure simple et peut être substitué à ou par un autre outil de travail. Un dispositif de préparation d'aliments multifonctions présentant une structure simple peut ainsi être obtenu.

A titre de variante, le boîtier 20 ne comporte pas nécessairement un organe de transmission 25. L'organe d'entraînement 11 de l'outil de travail 30 peut notamment être entraîné par la sortie d'entrainement 5 de la base motorisée 1.

A titre de variante, le boîtier 20 n'est pas nécessairement amovible par rapport à la base motorisée 1. Le boîtier 20 peut notamment être issu de la base motorisée 1.

A titre de variante, la paroi latérale circonférentielle 32 n'est pas nécessairement entièrement métallique.

A titre de variante, la ou les nervures internes 40 ne sont pas nécessairement surmoulées. La ou les nervures internes 40 peuvent notamment être clipsées à l'intérieur de la paroi latérale circonférentielle 32.

Diverses modifications et/ou améliorations évidentes pour la personne du métier peuvent être apportées au mode de réalisation de l'invention décrit dans la présente description tant que cela ne sort pas du cadre de l'invention défini par les revendications.

## Revendications

1. Outil de travail (30) rotatif comportant un organe d'entraînement (11) en rotation selon un axe de rotation (R) et une paroi latérale circonférentielle (32) s'étendant autour de l'axe de rotation (R), la paroi latérale circonférentielle (32) présentant au moins un organe de découpe externe (33) présentant un bord d'attaque (34) adjacent à un passage traversant (35) ménagé dans la paroi latérale circonférentielle (32), la paroi latérale circonférentielle (32) présentant une bordure circonférentielle (37) ménageant une ouverture frontale (36) pour l'évacuation des aliments découpés, **caractérisé en ce que** la face intérieure de la paroi latérale circonférentielle (32) porte au moins une nervure interne (40) configurée pour éjecter les aliments découpés vers l'ouverture frontale (36) lors de la rotation de l'outil de travail (30) rotatif pour découper les aliments.

2. Outil de travail (30) rotatif selon la revendication 1, **caractérisé en ce que** ladite au moins une nervure interne (40) se rapproche de la bordure circonférentielle (37) lorsque parcourue dans une direction allant du passage traversant (35) au bord d'attaque (34) adjacent.

3. Outil de travail (30) rotatif selon l'une des revendications 1 ou 2, **caractérisé en ce que** ladite au moins une nervure interne (40) s'étend sur au moins 90° autour de l'axe de rotation (R), et de préférence sur au moins 120° autour de l'axe de rotation (R).

4. Outil de travail (30) rotatif selon l'une des revendications 1 à 3, **caractérisé en ce que** ladite au moins une nervure interne (40) s'étend jusqu'à la bordure circonférentielle (37).

5. Outil de travail (30) rotatif selon l'une des revendications 1 à 4, **caractérisé en ce que** ladite au moins une nervure interne (40) est surmoulée sur la face intérieure de la paroi latérale circonférentielle (32).

6. Outil de travail (30) rotatif selon l'une des revendications 1 à 5, **caractérisé en ce que** ladite au moins une nervure interne (40) présente une configuration hélicoïdale.

7. Outil de travail (30) rotatif selon l'une des revendications 1 à 6, **caractérisé en ce qu'**il comporte une paroi de fond (12) agencée à l'opposé de l'ouverture frontale (36) et **en ce que** ladite au moins une nervure interne (40) s'étend à partir de la paroi de fond (12).

8. Outil de travail (30) rotatif selon l'une des revendications 1 à 7, **caractérisé en ce que** la face intérieure de la paroi latérale circonférentielle (32) porte une pluralité de nervures internes (40) configurées pour éjecter les aliments découpés vers l'ouverture frontale (36) lors de la rotation de l'outil de travail (30) rotatif pour découper les aliments, de préférence de 2 à 6 nervures internes (40) configurées pour éjecter les aliments découpés vers l'ouverture frontale (36) lors de la rotation de l'outil de travail (30) rotatif pour découper les aliments, les nervures internes (40) étant de manière préférée régulièrement réparties sur la face intérieure de la paroi latérale circonférentielle (32).

9. Outil de travail (30) rotatif selon l'une des revendications 1 à 8, **caractérisé en ce que** la paroi latérale circonférentielle (32) comprend une partie métallique circonférentielle (38) présentant les passages traversants (35) et **en ce que** ledit au moins un organe de découpe externe (33) est issu de la partie métallique circonférentielle (38), la bordure circonférentielle (37) étant si désiré surmoulée sur l'une des extrémités de la partie métallique circonférentielle (38), l'organe d'entrainement (11) en rotation étant si désiré porté par une extrémité d'entraînement (31) surmoulée sur l'autre extrémité de la partie métallique circonférentielle (38).

10. Outil de travail (30) rotatif selon l'une des revendications 1 à 9, **caractérisé en ce que** la paroi latérale circonférentielle (32) présente une pluralité d'organes de découpe externe (33) présentant chacun un bord d'attaque (34) adjacent à un passage traversant (35) ménagé dans la paroi latérale circonférentielle (32).

11. Outil de travail (30) rotatif selon l'une des revendications 1 à 10, **caractérisé en ce que** la paroi latérale circonférentielle (32) présente une géométrie tronconique.

12. Dispositif de préparation d'aliments comprenant :
- un outil de travail (30) rotatif comportant un organe d'entraînement (11) en rotation selon un axe de rotation (R) et une paroi latérale circonférentielle (32) s'étendant autour de l'axe de rotation (R), la paroi latérale circonférentielle (32) présentant au moins un organe de découpe externe (33) adjacent à un passage traversant (35), la paroi latérale circonférentielle (32) présentant une bordure circonférentielle (37) ménageant une ouverture frontale (36) pour l'évacuation des aliments découpés,
- un boîtier (20) définissant un logement (21) présentant une ouverture de montage (22) pour la mise en place de l'outil de travail (30) dans le logement (21), le boîtier (20) présentant une cheminée (23) pour l'introduction des aliments à découper, la cheminée (23) débouchant dans le logement (21) au moins partiellement en regard dudit au moins un organe de découpe externe (33),
**caractérisé en ce que** l'outil de travail (30) est conforme à l'une au moins des revendications 1 à 11.

13. Dispositif de préparation d'aliments selon la revendication 12, **caractérisé en ce qu'**il comporte un poussoir (24) pouvant être déplacé dans la cheminée (23) pour pousser les aliments vers l'outil de travail (30).

14. Dispositif de préparation d'aliments selon l'une des revendications 12 ou 13, **caractérisé en ce que** le boîtier (20) porte un organe de transmission (25) monté libre en rotation et **en ce que** l'organe d'entraînement (11) de l'outil de travail (30) monté dans le logement (21) vient en prise avec l'organe de transmission (25) pour entraîner en rotation l'outil de travail (30).

15. Dispositif de préparation d'aliments selon l'une des revendications 12 à 14, **caractérisé en ce qu'**il comporte une base motorisée (1) portant le boîtier (20) et **en ce que** l'outil de travail (30) monté dans le logement (21) est entrainé par un moteur électrique (3) disposé dans la base motorisée (1), si désiré par l'intermédiaire de l'organe de transmission (25).

16. Dispositif de préparation d'aliments selon la revendication 15, **caractérisé en ce que** le boîtier (20) est monté amovible par rapport à la base motorisée (1).
